# EUROPÄISCHE PATENTSCHRIFT

(11) **EP 4 115 844 B1**
(45) Veröffentlichungstag und Bekanntmachung des Hinweises auf die Patenterteilung: **08.01.2025**
(21) Anmeldenummer: 21183818.0
(22) Anmeldetag: 05.07.2021
(51) Int. Cl.: A61C 7/08, A61C 7/20, A61C 7/22

(54) **ZAHNSPANGEN UND KUNSTSTOFFSCHIENEN BZW. ALIGNER ZUR VERWENDUNG IN DER BEHANDLUNG VON ZAHNFEHLSTELLUNGEN, WOBEI DIE VERWENDUNG KRAFTMESSUNG UMFASST**
TOOTH CLASPS AND PLASTIC RAILS OR ALIGNER FOR USE IN THE TREATMENT OF MISPOSITIONED TEETH, WHEREIN THE USE COMPRISES FORCE MEASUREMENT
APPAREIL DENTAIRE ET RAILS EN MATIÈRE PLASTIQUE OU ALIGNEUR DESTINÉS À ÊTRE UTILISÉS DANS LE TRAITEMENT DE LA MALOCLUSION, L'UTILISATION COMPRENANT LA MESURE DE LA FORCE

(43) Veröffentlichungstag der Anmeldung: 11.01.2023
(73) Patentinhaber: DENTSPLY SIRONA Inc., York, PA 17401 (US); Sirona Dental Systems GmbH, 64625 Bensheim (DE)
(72) Erfinder: Brandes, Christoph, 64625 Bensheim (DE); Van Kempen, Jonathan Merlin, 64625 Bensheim (DE)
(74) Vertreter: Özer, Alpdeniz

(56) Entgegenhaltungen:
- WO-A2-2006/096558
- US-A- 3 936 938
- US-A1- 2008 248 439

## Beschreibung

### TECHNISCHES GEBIET DER ERFINDUNG

Die vorliegende Erfindung bezieht sich auf eine computergestützte Intraoral-Aufnahme Vorrichtung.

### HINTERGRUND DER ERFINDUNG

Die Aligner-Therapie (von "to align" = "ausrichten") ist eine kieferorthopädische Behandlungsmethode zur weitgehend unsichtbaren Behandlung von leichteren bis schweren Zahnfehlstellungen, die mit einer Sequenz von individuell gefertigten, dünnen und durchsichtigen Kunststoffschienen (auf Englisch" aligner") arbeitet. Die Kunststoffschienen werden durch Tiefziehverfahren von Thermoform-Folien oder durch additive Herstellungsverfahren wie 3D-Drucken hergestellt.

Für den Erfolg der Therapie ist es erforderlich, dass die Aligner auf den Zahn eine ausreichend hohe Kraft aufbringen. Im Laufe des Tragens des Aligners deformiert sich das Kunststoff-Material aus dem der Aligner hergestellt wurde. Infolge reduziert sich die Kraft, die auf den Zahn aufgebracht wird und eine wirksame Therapie kann nicht mehr gewährleistet werden. Daher verwendet der Arzt in regelmäßigen Abständen einen neuen Aligner damit die Therapie erfolgreich fortgesetzt werden kann.

Für die Wirksamkeit der Therapie ist es wichtig, dass die Aligner möglichst über die Dauer der Anwendung von gleichbleibender Qualität sind.

US2008248439A1 offenbart ein kieferorthopädisches Gerät und Verfahren.

Es wird auf WO2006096558 hingewiesen.

### OFFENBARUNG DER ERFINDUNG

Aktuell ist den Erfindern kein Stand der Technik bekannt mit dem der Arzt/ Patient einfach die Wirksamkeit der Behandlung feststellen, den Fortschritt der Behandlung verfolgen und z.B. den Wechselzeitpunkt für einen neuen Aligner bestimmen kann.

Das Ziel der vorliegenden Erfindung ist die Bereitstellung eines Verfahrens zur Kraftmessung bei Alignern, um die Wirksamkeit der Therapie festzustellen und den Fortschritt der Therapie zu verfolgen.

Diese Ziele wurden durch die computergestützte Intraoral-Aufnahme Vorrichtung nach Anspruch 1 erreicht. Die Gegenstände der abhängigen Ansprüche beziehen sich auf Weiterentwicklungen und bevorzugte Ausführungsformen.

Ein Aligner wird bereitgestellt zur Verwendung in der Behandlung von Zahnfehlstellungen, wobei die Verwendung Kraftmessung des Aligners auf die Zähne umfasst. Im Ausgangszustand befinden sich auf dem Aligner mindestens zwei Referenzierungsmerkmale. Diese Referenzierungsmerkmale sind so groß, dass sie von einer Kamera oder einem anderen Hilfsmittel genau erfasst werden können. Die Referenzierungsmerkmale sind optischer und oder topographischer Art. Die Referenzierungsmerkmale können sich auf der Innen- und/oder der Außenseite des Aligners befinden. Optische Merkmale können etwa farbige Markierungen bzw. Kontrastunterschiede sein. Topografische Merkmale können Erhebungen bzw. Vertiefungen oder regelmäßige Strukturen auf der Oberfläche sein. Optische und topografische Merkmale sind etwa oder mindestens 10µm groß, oder vorzugsweise 10 µm bis 100 µm groß, oder vorzugsweise 10 µm bis 1000 µm groß. Diese können vorzugsweise Mikrolinsen und/oder Mikroreflektoren aufweisen.

Das Verfahren zur Kraftmessung bei Alignern umfasst die folgenden Schritte: Bereitstellen der Kraft/Weg Kurven des verwendeten Kunststoffes des Aligners im Ausgangszustand; Ermitteln der Verschiebung der mindestens zwei Referenzierungsmerkmale voneinander relativ zum Ausgangszustand bedingt durch die Krafteinwirkung *während des Tragens* des Aligners vom Patienten, mittels Aufnahme von einer Kamera oder einem anderen geeigneten Hilfsmittel z.B. zur optischen Messung; Berechnung der Kräfte, die auf den Zahn wirken, durch Umrechnung der ermittelten Verschiebung über die bereitgestellte Kraft/Weg Kurve.

Gemäß der vorliegenden Erfindung wird ermöglicht, bei Alignern die auf den Zahn aufgebrachte Kraft zu ermitteln bzw. festzustellen ob auf den Zahn die minimal notwendige Kraft aufgebracht wird. Die notwendigen Kräfte pro Zahn können sich aufgrund der Biologie und der angestrebten Verschiebung unterscheiden. Die angestrebten Kräfte liegen aber immer im Bereich zwischen 0,05N und 5N.

Gemäß der vorliegenden Erfindung wird ferner ermöglicht, zu ermitteln wie sich die Kraft auf die Zähne im Laufe des Tragens des Aligners verändert bzw. festzustellen ob die Kraft auf die Zähne im Laufe des Tragens des Aligners einen notwendigen Grenzwert unterschreitet. Die Bestimmung der Kraft kann dabei sehr lokal erfolgen.

Durch das längere Tragen von Alignern verlieren diese ihre innere Spannung. D.h. Verformungen und damit die Verschiebung der Referenzierungsmerkmale sind irreversibel. Eine weitere Ausführungsform fokussiert sich auf die Feststellung dieser Art von irreversiblen Verformungen, um den Wechselzeitpunkt des Aligners zu bestimmen. Daher umfasst das Verfahren in einer weiteren Ausführungsform die folgende Schritte: Ermitteln der durch die Krafteinwirkung bedingten Verschiebung der mindestens zwei Referenzierungsmerkmale voneinander relativ zum Ausgangszustand *nach dem Herausnehmen* des Aligners mittels Aufnahme von einer Kamera oder einem anderen Hilfsmittel; und Berechnung der Kräfte, die auf den Zahn wirken durch Umrechnung der ermittelten Verschiebung über die bereitgestellte Kraft/Weg Kurve.

Gemäß der vorliegenden Erfindung wird dadurch ferner ermöglicht, dass der Arzt/Patient mit einem einfachen Hilfsmittel z.B. mit einer Handykamera & App oder einer intraoralen Kamera wie Primescan & Software den Wechselzeitpunkt angezeigt bekommen kann.

### KURZBESCHREIBUNG DER ZEICHNUNGEN

In der nachfolgenden Beschreibung wird die vorliegende Erfindung anhand von Ausführungsbeispielen unter Bezugnahme auf die Zeichnungen näher erläutert. Die Abbildungen 1-3 stellen Zahnspangen und Aligner dar, die aber nicht Teil der beanspruchten Erfindung sind.
Abb.1 - zeigt eine schematische Darstellung einer Zahnspange;
Abb.2 - zeigt eine schematische Darstellung eines Aligners von oben;
Abb.3 - zeigt eine schematische Darstellung eines Aligners von vorne.

Die in den Zeichnungen gezeigten Referenznummern bezeichnen die unten aufgeführten Elemente, auf die in der nachfolgenden Beschreibung der beispielhaften Ausführungsformen Bezug genommen wird.
1. Zahnspange
   1a. Draht
   1b. Referenzierungsmerkmal
2. Aligner/ Kunststoffschiene
   2a. Kunststoff
   2b. Referenzierungsmerkmal

Die Zahnspange fällt nicht in dem Umfang der beanspruchten Erfindung und dient nur zur verbesserten Verständlichkeit der Erfindung als Vergleichsbeispiel.

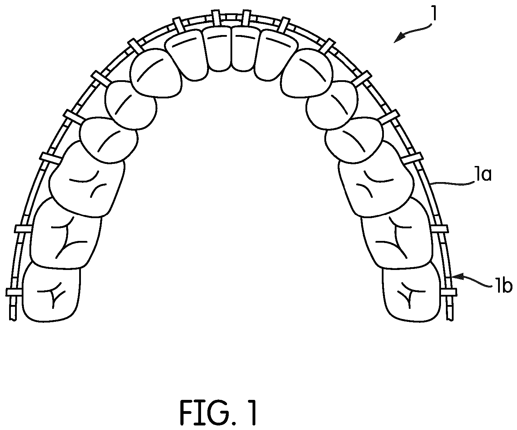

Abb.1 zeigt nach einem Vergleichsbeispiel eine Zahnspange (1) zur Verwendung in der Behandlung von Zahnfehlstellungen mittels Kraftmessung bei denselben. Im Ausgangszustand befinden sich auf dem Draht (1a) der Zahnspange mindestens zwei Referenzierungsmerkmale (1b). Diese Referenzierungsmerkmale (1b) sind so groß, dass sie in Aufnahme von einer Kamera oder einem anderen Hilfsmittel genau erfasst werden können. Die Referenzierungsmerkmale (1b) sind optischer oder topographischer Art. Die Anzahl der Referenzierungsmerkmale (1b) kann auch mehr als zwei sein.

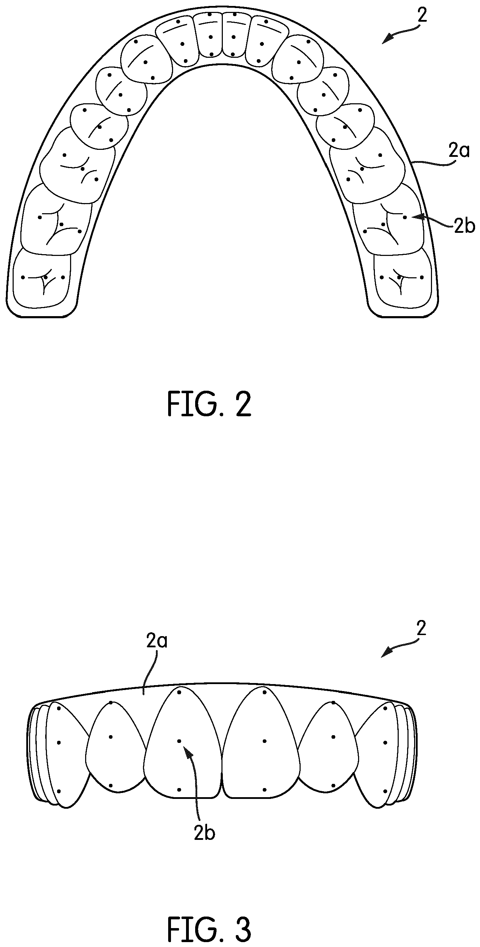

Abb.2 und Abb.3 zeigen nach einer Ausführungsform einen Aligner (2) zur Verwendung in der Behandlung von Zahnfehlstellungen mittels Kraftmessung bei denselben. Im Ausgangszustand befinden sich auf dem Kunststoff (2a) des Aligners (2) mindestens zwei Referenzierungsmerkmale (2b). Diese Referenzierungsmerkmale (2b) sind so groß, dass sie von einer Kamera oder einem anderen Hilfsmittel genau erfasst werden können. Die Referenzierungsmerkmale (2b) sind optischer oder topographischer Art. Die Anzahl der Referenzierungsmerkmale (1b) kann auch mehr als zwei sein. Vorzugsweise kann die Markierung der Referenzierungsmerkmale (1b; 2b) von Draht (1) oder Aligner (2) mit einem Laser erfolgen. Dadurch lassen sich auf dem Draht (1a) und Kunststoff (2a) präzise im Mikrometerbereich Markierungen aufbringen.

Im Folgenden wird das Verfahren zur Kraftmessung bei Zahnspanngen (1) oder Alignern (2) im Detail erklärt. Die Verwirklichung des Verfahrens benötigt die Bereitstellung einer markierten Zahnspange (1) oder Aligners (2) sowie die Ermittlung der Verschiebung und die Auswertung.

Durch die Krafteinwirkung beim Tragen der Zahnspange (1) oder des Aligners (2) verschieben sich diese Referenzierungsmerkmale (1b;2b) voneinander. Die Verschiebung kann über die Kraft/Weg Kurve des Materials in eine Kraft umgerechnet werden. Damit ist es möglich auch die Kräfte zu berechnen die auf den Zahn wirken. Hierzu werden die Kraft/ Weg Kurven des verwendeten Drahtes (1) der Zahnspange (1) bzw. Kunststoffes (2a) des Aligners (2) vorherbestimmt. Die Kraft Weg-Kurve ist eine materialspezifische Eigenschaft. Allerdings bei dem anschließenden Berechnen der Kraft wird die Dicke des Aligners (2) bzw. des Drahtes (1a) verwendet.

Ferner wird ermöglicht, bei Zahnspangen während der Befestigung des Drahtes die aufgebrachte Kraft zu erfassen und ggf. zu korrigieren.

Durch das längere Tragen von Alignern (2) verlieren diese ihre innere Spannung. D.h. Verformungen und damit die Verschiebung der Referenzierungsmerkmale (2b) sind irreversibel. Dadurch kann auch nach dem *Herausnehmen* des Aligners (2) festgestellt werden welche Kräfte gewirkt haben bzw. ob der Aligner (2) noch in der Lage ist ausreichend Kraft auf die Zähne aufzubringen.

Die Messung und Auswertung der Daten werden vorzugsweise als Softwarelösung programmiert.

Gemäß der vorliegenden Erfindung können die Datensätze, die durch die oben aufgeführten Verfahren erzeugt werden zur Visualisierung, insbesondere für therapeutische diagnostische Zwecke, einem Arzt vorgelegt werden, vorzugsweise mittels eines Bildschirms oder Ausdrucks.

Das erfindungsgemäße Verfahren ist ein Computer implementiertes Verfahren, das auf einer computergestützten Intraoral-Aufnahme Vorrichtung ausgeführt ist. Hierzu umfasst die vorliegende Erfindung auch ein Computerprogramm mit computerlesbarem Code. Das Computerprogramm kann auf einem Datenspeicher bereitgestellt werden. Die computergestützte Intraoral-Aufnahme Vorrichtung umfasst eine Kamera, um die Pateientenaufnahme zu liefern. Die computergestützte Intraoral-Aufnahme Vorrichtung umfasst ferner einen Rechner oder eine Recheneinheit, die mit der Kamera verbindbar ist. Der Rechner kann lokal oder alternativ über das Internet mit der Kamera verbunden werden. Die Rechenschritte können lokal oder in der Cloud stattfinden. Der Rechner oder die Recheneinheit führt das Computerprogramm aus und liefert die Datensätze, u.a. für die Visualisierung auf einer Anzeige. Die computergestützte Intraoral-Aufnahme Vorrichtung umfasst ferner vorzugsweise eine Anzeige, um die Datensätze einem Arzt zu visualisieren. Die Intraoral-Aufnahme Vorrichtung umfasst vorzugsweise eine Handykamera & App, oder eine intraorale Kamera wie die Primescan & Software.

## Patentansprüche

1. Computergestützte Intraoral-Aufnahme Vorrichtung umfassend eine Kamera und eine Recheneinheit, die zur Ausführung eines Computerprogramms konfiguriert ist, welche computerlesbaren Code umfasst, das wenn es von der computergestützten Intraoral-Aufnahme Vorrichtung ausgeführt wird, diese veranlasst,
Verfahrensschritte eines Verfahren zur Kraftmessung bei einem Aligner (2) auszuführen, wobei
die computergestützte Intraoral-Aufnahme Vorrichtung für die Verwendung mit einem Aligner konfiguriert ist, bei dem sich im Ausgangszustand auf dem Aligner (2) mindestens zwei Referenzierungsmerkmale (1b;2b) befinden,
wobei diese Referenzierungsmerkmale (1b;2b) so groß sind, vorzugsweise etwa oder mindestens 10 Mikrometer, dass sie mit der Kamera genau erfasst werden können,
wobei die Referenzierungsmerkmale (1b;2b) optischer oder topographischer Art sind,
wobei das Verfahren folgende Schritte umfasst:
Bereitstellen der Kraft/Weg Kurven des verwendeten Kunststoffes (2a) des Aligners (2) im Ausgangszustand;
Ermitteln der Verschiebung der mindestens zwei Referenzierungsmerkmale (1b;2b) voneinander relativ zum Ausgangszustand bedingt durch die Krafteinwirkung *während* des Tragens des Aligners (2) vom Patienten mittels der Kamera;
Berechnung der Kräfte, die auf den Zahn wirken durch Umrechnung der ermittelten Verschiebung über die bereitgestellte Kraft/Weg Kurve und die bekannte Geometrie des Kunststoffes (2a).

2. Computergestützte Intraoral-Aufnahme Vorrichtung nach dem Anspruch 1, **gekennzeichnet dadurch dass** das Verfahren ferner folgende Schritte umfasst:
Ermitteln der durch die Krafteinwirkung bedingten Verschiebung der mindestens zwei Referenzierungsmerkmale (2b) voneinander relativ zum Ausgangszustand nach dem *Herausnehmen* des Aligners (2) mittels Aufnahme von der Kamera;
Berechnung der Kräfte, die auf den Zahn wirken durch Umrechnung der ermittelten Verschiebung über die bereitgestellte Kraft/Weg Kurve und die bekannte Geometrie des Aligners (2).

3. Computergestützte Intraoral-Aufnahme Vorrichtung nach dem Anspruch 1 oder 2, **gekennzeichnet dadurch, dass** diese ein Handy und einem des Computerprogramms entsprechenden Apps umfasst.

## Claims

1. A computer-assisted intraoral recording device comprising a camera and a computing unit configured to execute a computer program, the computing unit comprising computer-readable code which, when executed by the computer-assisted intraoral recording device, causes the recording device to
execute method steps of a method for measuring the force of an aligner (2), wherein the computer-assisted intraoral recording device is configured for use with an aligner in which there are at least two referencing features (1b;2b) located on the aligner (2) in the initial state,
wherein these referencing features (1b;2b) are large enough, preferably approximately or at least 10 micrometers, for the camera to detect them precisely,
wherein the referencing features (1b;2b) are visual or topographical features,
wherein the method comprises the following steps:
providing the force/path curves of the plastic (2a) used for the aligner (2) in the initial state;
using the camera, ascertaining the displacement of the at least two referencing features (1b;2b) from one another relative to the initial state caused by the force exerted *while* the patient is wearing the aligner (2);
calculating the forces acting on the tooth by converting the ascertained displacement using the force/path curve provided and the known geometry of the plastic (2a).

2. The computer-assisted intraoral recording device according to claim 1, **characterized in that** the method further comprises the following steps:
using the recording from the camera, ascertaining the displacement of the at least two referencing features (2b), caused by the exerted force, from one another relative to the initial state after *removal* of the aligner (2);
calculating the forces acting on the tooth by converting the ascertained displacement using the force/path curve provided and the known geometry of the aligner (2).

3. The computer-assisted intraoral recording device according to claim 1 or 2, **characterized in that** it comprises a mobile phone and an app corresponding to the computer program.

## Revendications

1. Dispositif de capture intra-orale assisté par ordinateur, comprenant une caméra et une unité de calcul, configuré pour l'exécution d'un programme informatique, lequel comprend un code lisible par ordinateur, qui, lorsqu'il est exécuté par le dispositif de capture intra-orale assisté par ordinateur, amène celui-ci
à exécuter des étapes de procédé d'un procédé de mesure de force sur un aligneur (2), dans lequel le dispositif de capture intra-orale assisté par ordinateur est configuré pour être utilisé avec un aligneur, au sein duquel au moins deux repères de référence (1b ; 2b) sont présents sur l'aligneur (2) dans l'état initial,
dans lequel les repères de référence (1b ; 2b) ont une taille suffisamment grande, de préférence d'environ ou d'au moins 10 micromètres, pour qu'ils puissent être précisément capturés par la caméra,
dans lequel les repères de référence (1b ; 2b) sont de nature optique ou topographique,
dans lequel le procédé comprend les étapes suivantes :
la mise à disposition des courbes force/course du matériau composite (2a) utilisé de l'aligneur (2) dans l'état initial ;
la détermination du déplacement d'au moins deux repères de référence (1b ; 2b) l'un vis à vis de l'autre par rapport à l'état initial, causé par l'application de force *lors* du port de l'aligneur (2) par le patient, par l'intermédiaire de la caméra ;
le calcul des forces qui s'exercent sur la dent par conversion du déplacement déterminé via la courbe force/course mise à disposition et la géométrie connue du matériau composite (2a).

2. Dispositif de capture intra-orale assisté par ordinateur selon la revendication 1, **caractérisé en ce que** le procédé comprend en outre les étapes suivantes :
la détermination du déplacement, causé par l'application de force, d'au moins deux repères de référence (2b), l'un vis à vis de l'autre par rapport à l'état initial, après le *retrait* de l'aligneur (2) par capture à partir de la caméra ;
le calcul des forces qui s'exercent sur la dent par conversion du déplacement déterminé via la courbe force/course mise à disposition et la géométrie connue de l'aligneur (2).

3. Dispositif de capture intra-orale assisté par ordinateur selon la revendication 1 ou 2, **caractérisé en ce qu'**il comprend un téléphone mobile et une application correspondant au programme informatique.
